# EUROPÄISCHE PATENTSCHRIFT

(11) **EP 2 602 530 B1**
(45) Veröffentlichungstag und Bekanntmachung des Hinweises auf die Patenterteilung: **11.01.2017**
(21) Anmeldenummer: 12193308.9
(22) Anmeldetag: 20.11.2012
(51) Int. Cl.: F16L 27/04, F16L 11/18, F02B 29/04, F02M 35/10

(54) **GLIEDERSCHLAUCH**
MULTILINK HOSE
TUYAU SOUPLE ARTICULÉ

(30) Priorität: 24.11.2011 DE 102011087001
(43) Veröffentlichungstag der Anmeldung: 12.06.2013
(60) Teilanmeldung: 15173673.3
(73) Patentinhaber: MAHLE International GmbH, 70376 Stuttgart (DE)
(72) Erfinder: Braun, Ralf, 73312 Geislingen (DE); Gui, Nicolae, 300446 Timisoara (RO); Kohler, Samuel, 71093 Weil im Schönbuch (DE); Pröttel, Thomas, 73728 Esslingen (DE); Schieszl, Andreas, 73479 Ellwangen (DE); Schuller, Marc, 71364 Winnenden (DE); Zahlecker, Manuel, 73765 Neuhausen (DE)
(74) Vertreter: BRP Renaud & Partner mbB Rechtsanwälte Patentanwälte Steuerberater

(56) Entgegenhaltungen:
- WO-A1-2011/009468
- DE-A1- 2 006 845
- DE-T2- 60 114 753
- DE-U1- 8 704 386
- DE-U1- 29 509 507
- US-A- 5 290 075

## Beschreibung

Die Erfindung betrifft einen Gliederschlauch für die Leitung von Fluiden mit den Merkmalen des Oberbegriffs des Anspruchs 1.

Aus der DE 295 09 507 U1 ist ein Gliederschlauch für die Leitung von Fluiden bekannt, der mehrere beweglich miteinander verbundene Segmente aufweist. Innerhalb des Gliederschlauchs wird zwischen benachbarten Segmenten eine gelenkige Verbindung dadurch herstellt, dass das eine Segment eine kugelschalensegmentförmige Innenkontur aufweist, während das andere Segment eine kugelschalensegmentförmige Außenkontur aufweist, die komplementär zur Innenkontur des einen Segments geformt ist und darin beweglich angeordnet ist. Damit die im Bereich der gelenkigen Verbindung ineinander gesteckten Segmente nicht auseinanderfallen, ist die Innenkontur des einen Segments in einem dem anderen Segment zugewandten Endabschnitt so geformt, dass sich ein Hinterschnitt bildet, der die Außenkontur des anderen Segments formschlüssig übergreift. Durch die Verwendung elastischer Werkstoffe zur Herstellung der Segmente lassen sich die Segmente unter elastischer Aufweitung der Innenkontur des einen Segments ineinanderstecken, wobei dann die elastisch aufgeweitete Innenkontur wieder in ihre Ausgangsform zurückfedert und die Außenkontur des anderen Segments formschlüssig übergreift. Hierdurch ergibt sich eine Art Clipsverbindung oder Rastverbindung zwischen benachbarten Segmenten.

Bekannte Gliederschläuche dieser Art werden dazu verwendet, Kühl- und Schmierstoffe einem Arbeitsbereich einer spanabhebenden Werkzeugmaschine zuführen zu können. Die Beweglichkeit des Gliederschlauchs ermöglicht dabei eine gezielte Ausrichtung der Kühl- und Schmierstoffzuführung auf den jeweiligen Arbeitsbereich und lässt sich einfach an variierende Situation im Arbeitsbereich anpassen, die von der jeweiligen Arbeitsaufgabe abhängen. Wichtig ist dabei, dass die jeweils eingestellte Ausrichtung der Kühl- und Schmierstoffzuführung möglichst konstant erhalten bleibt und sich nicht von selbst verstellt. Dabei ist ein derartiger Gliederschlauch einlassseitig an eine Kühl- und Schmierstoffzuführeinrichtung angeschlossen, während er auslassseitig freistehend im Arbeitsbereich positioniert ist.

Um bei einem solchen Gliederschlauch eine gewisse Formstabilität trotz der zueinander beweglichen Segmente erzielen zu können, ist beim bekannten Gliederschlauch im Inneren ein Rohr angeordnet, das plastisch und reversibel biegbar ist.

Aus der DE 601 14 753 T2 ist ein gattungsgemäßer Gliederschlauch bekannt, der mehrere gelgenkig miteinander verbundene Segmente aufweist, durch die beim bekannten Gliederschlauch ein Unterseekabel hindurchgeführt ist, so dass die Segmente das Unterseekabel schützend umgeben. An den Segmenten ausgebildete, außenliegende Anschlagflächen begrenzen eine Durchbiegung des Unterseekabels bei seiner Verlegung, um eine Beschädigung des Unterseekabels zu vermeiden.

Die vorliegende Erfindung beschäftigt sich mit dem Problem, für einen derartigen Gliederschlauch eine verbesserte oder zumindest eine andere Ausführungsform anzugeben, die sich insbesondere durch eine hohe Stabilität auszeichnet.

Dieses Problem wird bei der vorliegenden Erfindung insbesondere durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen derartigen Gliederschlauch als Ladeluftschlauch bei einer Brennkraftmaschine zum Verbinden eines Verdichterausgangs einer Ladeeinrichtung mit einem Ladeluftkühlereingang zu verwenden. Derartige Ladeluftschläuche sind hohen thermischen und mechanischen Belastungen ausgesetzt. Herkömmliche Konstruktionen derartiger Ladeluftschläuche sind regelmäßig sehr aufwändig und dementsprechend teuer. Problematisch ist dabei vor allem der Umstand, dass einerseits eine hohe Elastizität gefordert ist, um die im Betrieb einer Brennkraftmaschine auftretenden Relativbewegungen zwischen Ladeluftkühler und Verdichter kompensieren zu können. Andererseits fordern die auf der Druckseite des Verdichters auftretenden hohen Drücke und Temperaturen eine hohe Stabilität bzw. Festigkeit. Hinreichend elastische Werkstoffe zeigen häufig nicht die gewünschte Festigkeit. Es hat sich nun überraschenderweise herausgestellt, dass sich ein Gliederschlauch in besonderer Weise für die Verwendung als Ladeluftschlauch eignet, da er aus mehreren, beweglich miteinander verbundenen Segmenten aufgebaut ist, wobei die gelenkig miteinander verbundenen Segmente dem Gliederschlauch eine hinreichende Beweglichkeit und somit Elastizität geben, um Relativbewegungen zwischen Ladeluftkühler und Verdichter kompensieren zu können. Ferner lassen sich die einzelnen Segmente sehr stabil ausgestalten, um auch die gewünschte Druck- und Temperaturfestigkeit realisieren zu können.

Abweichend zu einer Ausrichtung einer Kühl- und Schmierstoffzuführung auf einen Arbeitsbereich einer Werkzeugmaschine wird der Gliederschlauch gemäß der Erfindung nun zum fluidischen Verbinden von zwei gasführenden Komponenten verwendet, wobei der Gliederschlauch mit seinem einlassseitigen Ende fest mit dem Verdichterausgang verbunden ist, während er mit seinem auslassseitigen Ende fest mit dem Ladeluftkühlereingang verbunden ist. Somit kommt der Gliederschlauch hier zu einer beidseitig fixierten Verwendung, während er an sich für eine nur einseitig fixierte Verwendung vorgesehen ist.

Eine nicht erfindungsgemäße gelenkige Verbindung zwischen zwei ringförmigen Bauteilen beruht auf dem allgemeinen Gedanken, dass eine kugelschalensegmentförmige Innenkontur eines ersten Bauteils, die komplementär zu einer kugelschalensegmentförmigen Außenkontur eines zweiten Bauteils geformt ist und daran beweglich angeordnet ist, einen dem zweiten Bauteil zugewandten ringförmigen Endabschnitt aufweist, der nicht integral am ersten Bauteil, sondern an einem separat zum ersten Bauteil und separat zum zweiten Bauteil realisierten Haltering ausgebildet ist, der am ersten Bauteil befestigt ist. Mit anderen Worten, die gelenkige Verbindung umfasst somit zumindest drei Komponenten, nämlich das erste Bauteil, das zweite Bauteil und den Haltering, wobei der Haltering im montierten Zustand mit dem ersten Bauteil eine bauliche Einheit bildet und ein Teil der Innenkontur der Verbindung, nämlich ein dem zweiten Bauteil zugewandter ringförmiger Endabschnitt am Haltering ausgebildet ist, so dass die Innenkontur erst durch die Befestigung des Halterings am ersten Bauteil komplettiert ist. Durch diese Bauweise vereinfacht sich die Montage der gelenkigen Verbindung für den Fall, dass die einzelnen Bauteile eine vergleichsweise hohe Formstabilität besitzen.

Entsprechend einer nicht erfindungsgemäßen Ausführungsform kann der am Haltering ausgebildete Endabschnitt der Innenkontur einen Hinterschnitt bilden, der die Außenkontur des zweiten Bauteils formschlüssig übergreift. In der Folge können die Bauteile nur unter Zerstörung des ersten Bauteils und/oder des zweiten Bauteils und/oder des Halterings voneinander axial gelöst werden. Weiterhin hat diese Bauform zur Folge, dass die gelenkige Verbindung relativ hohe Zugkräfte aufnehmen bzw. abtragen kann, ohne dass dabei die ineinander gesteckten Bauteile voneinander getrennt werden.

Entsprechend einer nicht erfindungsgemäßen Ausführungsform kann der Innenkonturabschnitt des Halterings am größten Innendurchmesser an den Innenkonturabschnitt des ersten Bauteils axial anschließen. Dabei kann axial zwischen den einander zugewandten axialen Stirnseiten der beiden Innenkonturabschnitte von Haltering und erstem Bauteil eine axiale Lücke ausgebildet sein. Ebenso können die beiden axialen Stirnseiten unmittelbar aneinanderstoßen. Im Bereich der axialen Stirnseiten besitzt sowohl der Innenkonturabschnitt des Halterings als auch der Innenkonturabschnitt des ersten Bauteils jeweils seinen größten Innendurchmesser. Durch die gewählte Bauform lassen sich die Bauteile bei entferntem Haltering ohne Deformation einfach ineinanderstecken. Der eingesteckte Zustand kann dann durch Montieren des Halterings gesichert werden.

Bei einer anderen nicht erfindungsgemäßen Ausführungsform kann der Haltering aus wenigstens zwei Teilringen zusammengebaut sein, wobei die Teilringe in der Umfangsrichtung aneinander anschließen und aneinander angebaut sind. Denkbar ist grundsätzlich auch eine Ausführungsform, bei welcher der Haltering nicht in der Umfangsrichtung, sondern axial geteilt ist. Bevorzugt wird jedoch eine Teilung des Halterings in der Umfangsrichtung. Beispielsweise kann der Haltering in genau zwei Teilringe oder Halbringe geteilt sein, die sich jeweils in der Umfangsrichtung über 180° erstrecken. Die Verwendung eines geteilten Halterings vereinfacht den Zusammenbau der gelenkigen Verbindung.

Entsprechend einer anderen nicht erfindungsgemäßen Ausführungsform kann zumindest eine Dichtung zwischen Innenkontur und Außenkontur vorgesehen sein. Hierdurch kann die gelenkige Verbindung nach außen abgedichtet werden, so dass sich die gelenkige Verbindung auch zur Führung eines Fluids eignet.

Beispielsweise kann zumindest eine Dichtung an die Außenkontur oder an die Innenkontur angespritzt sein, wodurch sich der Montageaufwand für die gelenkige Verbindung reduziert. Zusätzlich oder alternativ kann zumindest eine solche Dichtung in eine Ringnut eingesetzt sein, beispielsweise in Form eines O-Ringes. Eine derartige Ringnut kann beispielsweise am ersten Bauteil oder am zweiten Bauteil oder am Haltering ausgebildet sein. Ebenso ist es möglich, eine derartige Ringnut teilweise am ersten Bauteil und teilweise am Haltering auszubilden, so dass die Ringnut erst bei montiertem Haltering komplettiert ist.

Entsprechend einer anderen nicht erfindungsgemäßen Ausführungsform kann das erste Bauteil an einen dem zweiten Bauteil zugewandten Ende einen radial nach außen abstehenden ringförmig umlaufenden Kragen aufweisen, der in eine dazu komplementäre, am Haltering ausgebildete Aufnahmenut eingreift. Hierdurch lässt sich der Haltering besonders einfach formschlüssig am ersten Bauteil festlegen.

Vorteilhaft ist dabei eine nicht erfindungsgemäßen Ausführungsform, bei welcher der Haltering bezüglich des zweiten Bauteils lose angeordnet ist, um die gewünschte Beweglichkeit zwischen den beiden Bauteilen zu gewährleisten.

Entsprechend einer anderen nicht erfindungsgemäßen Ausführungsform kann der Haltering an einem dem zweiten Bauteil zugewandten Ende eine ringförmige Anschlagkontur aufweisen, die zur Begrenzung der winkelmäßigen Beweglichkeit der Verbindung mit einer außen am zweiten Bauteil ausgebildeten Gegenanschlagkontur zusammenwirkt. Hierdurch übernimmt der Haltering eine Zusatzfunktion, da er zur Begrenzung der Beweglichkeit der gelenkigen Verbindung dient. Die Anschlagkontur kann dabei beispielsweise durch eine Anfasung oder dergleichen realisiert sein. Zweckmäßig kommt es im Bereich der Anschlagkontur zu einer flächigen Kontaktierung zwischen Haltering und zweitem Bauteil. Gemäß einer anderen nicht erfindungsgemäßen Ausführungsform kann das erste Bauteil einen ersten Abschnitt eines Segments eines Gliederschlauchs für die Leitung eines Fluids bilden, während das zweite Bauteil einen zweiten Abschnitt dieses Segments bildet. Zur Realisierung der gelenkigen Verbindung sind dann zwei Segmente erforderlich, die jeweils einen das erste Bauteil bildenden ersten Abschnitt und einen das zweite Bauteil bildenden zweiten Abschnitt aufweisen. Insbesondere sind die Segmente dabei Gleichteile, also identische Teile. Der mit Hilfe dieser Segmente gebildete Gliederschlauch charakterisiert sich dadurch, dass zumindest zwei benachbarte Segmente mit Hilfe einer gelenkigen Verbindung der vorstehend beschriebenen Art miteinander gelenkig verbunden sind. Es ist klar, dass die Länge eines derartigen Gliederschlauchs über die Anzahl der hierfür verwendeten Segmente quasi beliebig eingestellt werden kann.

Gemäß einer anderen nicht erfindungsgemäßen Ausführungsform kann der vorstehend beschriebene Gliederschlauch einen flexiblen Schlauch aufweisen, der durch die Segmente hindurchgeführt ist, also im Inneren der Segmente angeordnet ist und der sich radial außen an den Segmenten abstützt. Bei dieser Ausführungsform übernimmt der flexible Schlauch weitgehend die Abdichtung des Gliederschlauchs nach außen, um Fluide führen zu können. Im Unterschied dazu übernehmen die Segmente des Gliederschlauchs die Druckstabilität des Gliederschlauchs für Überdrücke im geführten Medium gegenüber einer Umgebung des Gliederschlauchs. Wichtig ist dabei, dass es sich hierbei um einen flexiblen und somit elastisch verformbaren Schlauch handelt, der die Beweglichkeit des Gliederschlauchs nicht beeinträchtigt.

### xx

Ein erfindungsgemäßer Gliederschlauch, bei dem die gelenkig miteinander verbundenen ringförmigen Segmente jeweils einen Außenringabschnitt und einen Innenringabschnitt aufweisen, der in den Außenringabschnitt eines benachbarten Segments eingesteckt ist, beruht auf dem allgemeinen Gedanken, das jeweilige Segment an seinem Außenringabschnitt mit zwei axial abstehenden einander diametral gegenüberliegenden Laschen auszustatten, die jeweils ein Lagerauge besitzen. Darüber hinaus soll das jeweilige Segment an seinem Innenringabschnitt zwei radial nach außen abstehende, voneinander diametral abgewandte Zapfen aufweisen. Die beiden Laschen und die beiden Zapfen können dabei optional zueinander in der Umfangsrichtung, z.B. um 90°, versetzt angeordnet sein. Zur Realisierung einer gelenkigen Verbindung zwischen benachbarten Segmenten innerhalb des Gliederschlauchs können nun die Zapfen des einen Segments in die Lageraugen der Laschen des benachbarten anderen Segments eingreifen. Da sich Zapfen und Laschen diametral gegenüberliegen, definieren sie gemeinsam eine Schwenkachse, um welche die beiden Segmente zueinander verschwenkbar sind. Diese Schwenkachse erstreckt sich dabei senkrecht zu einer Längsmittelachse der beiden benachbarten Segmente. Eine derartige gelenkige Verbindung lässt sich vergleichsweise preiswert realisieren. Ferner wird die Gelenkfunktion innerhalb der Segmente auf die Laschen und Zapfen verlagert, so dass die fluidführende Funktion der Segmente davon nicht beeinträchtigt ist. Insbesondere können die Segmente dadurch besonders einfach für die vorgesehene Verwendung mit hinreichender Druckstabilität ausgestattet werden.

Entsprechend einer vorteilhaften Ausführungsform kann die jeweilige Lasche eine Einführschräge aufweisen. Zusätzlich oder alternativ kann der jeweilige Zapfen eine Einführschräge aufweisen. Das Vorsehen von Einführschrägen an den Laschen und/oder an den Zapfen vereinfacht die Montage des Gliederschlauchs, da sich die Zapfen einfacher in die zugehörigen Lageraugen einführen lassen.

Erfindungsgemäß weist das jeweilige Segment an einer Innenseite seines Außenringabschnitts eine Anschlagkontur auf, die mit einer axialen Stirnseite des Innenringabschnitts eines benachbarten Segments zur Begrenzung der winkelmäßigen Beweglichkeit der Segmente relativ zueinander zusammenwirkt. Durch die Realisierung eines Anschlags zwischen benachbarten Segmenten an der Innenseite kann die an der Außenseite angeordnete gelenkige Verbindung über die Laschen und Zapfen diesbezüglich entlastet werden.

Des Weiteren führt die Anordnung des Anschlags sowie des Gegenanschlags im Inneren der Segmente dazu, dass die miteinander zusammenwirkenden Konturen vor Verunreinigungen geschützt sind. Hierdurch lässt sich beispielsweise der Verschleiß reduzieren.

Bei einer zweckmäßigen Weiterbildung kann die Anschlagkontur zwei halbe Ringstufen aufweisen, die sich in der Umfangsrichtung jeweils über 180° erstrecken, die in einer Längsmittelebene des jeweiligen Segments aneinandergrenzen, in der eine durch die Lageraugen desselben Segments definierte Schwenkachse liegt, und die jeweils in einer Ebene liegen, die zu einer senkrecht zur Längsmittelachse des jeweiligen Segments verlaufenden Normalebene entgegengesetzt geneigt sind. Die Neigung der Ebenen, in denen die Ringstufen liegen, gegenüber der Normalebene definiert bzw. begrenzt die winkelmäßige Beweglichkeit der benachbarten Segmente ausgehend von einer koaxialen Ausrichtung ihrer Längsmittelachsen zueinander. Die Formgebung der Ringstufen ermöglicht dabei eine flächige Kontaktierung zwischen Anschlagkontur und axialer Stirnseite, wodurch die Flächenpressung und der Verschleiß reduziert werden können.

Gemäß einer vorteilhaften Weiterbildung kann die Innenseite des Außenringabschnitts des jeweiligen Segments an die jeweilige halbe Ringstufe angrenzend eine kugelschalensegmentförmige Innenkontur aufweisen. Hierdurch kann ein im Bereich der axialen Stirnseite des jeweiligen Innenringabschnitts ausgebildeter radialer Ringspalt gegenüber der Innenseite des Außenringabschnitts des benachbarten Segments in allen Schwenklagen zwischen den Segmenten eine im Wesentlichen konstante Spaltbreite besitzen, was das Eindringen von Verunreinigungen erschwert.

Entsprechend einer anderen vorteilhaften Ausführungsform können benachbarte Segmente soweit ineinandergesteckt sein, dass eine Innenkontur des Innenringabschnitts des einen Segments axial an die Innenkontur des Innenringabschnitts des anderen Segments anschließt. Hierdurch ergibt sich eine vergleichsweise große axiale Überdeckung der ineinandergesteckten Segmente, wodurch insbesondere auch eine hohe Druckstabilität für hohe Überdrücke im Inneren des Gliederschlauchs erzielt werden kann.

Zweckmäßig ist dabei eine Ausführungsform, bei welcher die Innenkontur des Außenringabschnitts des jeweiligen Segments über die Anschlagkontur in die Innenkontur des Innenringabschnitts desselben Segments übergeht. Hierdurch lassen sich benachbarte Segmente besonders kompakt ineinanderstecken. Gleichzeitig wird dadurch für die Fluidführung im Inneren des Gliederschlauchs ein im Wesentlichen konstant bleibender Innenquerschnitt realisiert, der durch die Innenkontur der Innenringabschnitte vorgegeben ist.

Gemäß einer anderen vorteilhaften Ausführungsform kann der vorstehend beschriebene Gliederschlauch einen flexiblen Schlauch aufweisen, der durch die Segmente hindurchgeführt ist, also im Inneren der Segmente angeordnet ist und der sich radial außen an den Segmenten abstützt. Bei dieser Ausführungsform übernimmt der flexible Schlauch weitgehend die Abdichtung des Gliederschlauchs nach außen, um Fluide führen zu können. Im Unterschied dazu übernehmen die Segmente des Gliederschlauchs die Druckstabilität des Gliederschlauchs für Überdrücke im geführten Medium gegenüber einer Umgebung des Gliederschlauchs. Wichtig ist dabei, dass es sich hierbei um einen flexiblen und somit elastisch verformbaren Schlauch handelt, der die Beweglichkeit des Gliederschlauchs nicht beeinträchtigt.

Wie bereits weiter oben erläutert, kann ein derartiger Gliederschlauch vorteilhaft als Ladeluftschlauch bei einer Brennkraftmaschine zum Verbinden eines Verdichterausgangs einer Ladeeinrichtung mit einem Ladeluftkühlereingang verwendet werden. Insoweit betrifft die vorliegende Erfindung auch einen Ladeluftschlauch, der bei einer Brennkraftmaschine zum Verbinden eines Verdichterausgangs einer Ladeeinrichtung mit einem Ladeluftkühlereingang geeignet ist, wobei sich der Ladeluftschlauch dadurch charakterisiert, dass er als Gliederschlauch der vorstehend beschriebenen Art ausgestaltet ist.

Die vorliegende Erfindung betrifft außerdem für sich genommen ein Segment, mit dessen Hilfe ein Gliederschlauch gemäß den vorstehend beschriebenen Ausführungsformen realisiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils einen Längsschnitt eines nicht erfindungsgemäßen Gliederschlauchs im Bereich einer gelenkigen Verbindung, bei verschiedenen Ausführungsformen,
- Fig. 3: ein isometrischer Längsschnitt des nicht erfindungsgemäßen Gliederschlauchs bei einer weiteren Ausführungsform,
- Fig. 4: eine auseinandergezogene isometrische Ansicht des nicht erfindungsgemäßen Gliederschlauchs bei einer weiteren Ausführungsform,
- Fig. 5: eine auseinandergezogene isometrische Darstellung eines Halterings der gelenkigen Verbindung,
- Fig. 6: ein isometrischer Längsschnitt eines erfindungsgemäßen Gliederschlauchs Ausführungsform,
- Fig. 7: eine isometrische Ansicht des erfindungsgemäßen Gliederschlauchs aus Fig. 6,
- Fig. 8: ein vergrößertes Detail VIII des erfindungsgemäßen Gliederschlauchs aus Fig. 7.

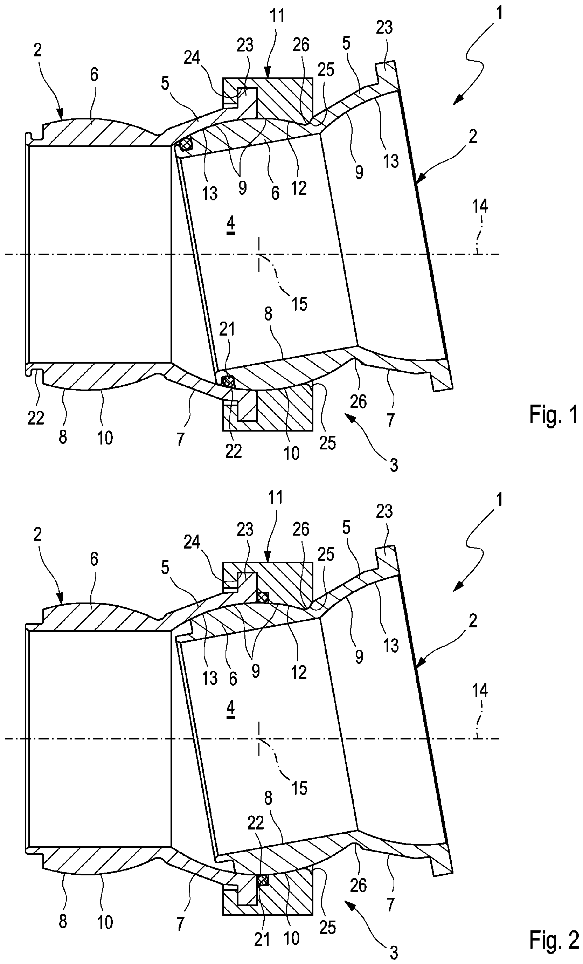

Entsprechend den Fig. 1 bis 8 umfasst ein Gliederschlauch 1 mehrere Segmente 2, die relativ zueinander separate Bauteile sind und die beweglich miteinander verbunden sind. Um zwei benachbarte Segmente 2 beweglich miteinander ver binden zu können, ist jeweils eine gelenkige Verbindung 3 vorgesehen. Der Gliederschlauch 1 dient zum Leiten von Fluiden. Hierzu sind die einzelnen Segmente 2 ringförmig konzipiert, insbesondere kreisringförmig. Somit definiert der Gliederschlauch 1 einen Hohlraum 4 oder Innenraum 4 zum Leiten des jeweiligen Fluids. Entsprechend einer erfindungsgemäßen Anwendung oder Verwendung des Gliederschlauchs 1 kann er als Ladeluftschlauch verwendet werden, der bei einer Brennkraftmaschine, die insbesondere in einem Kraftfahrzeug angeordnet sein kann, zum fluidischen Verbinden eines Ausgangs eines Verdichters, insbesondere eines Abgasturboladers, mit einem Eingang eines Ladeluftkühlers verwendet werden kann.

Im Folgenden wird zunächst im Hinblick auf die Fig. 1 bis 5 näher auf die gelenkige Verbindung 3 eingegangen, mit deren Hilfe zwei benachbarte Segmente 2 des Gliederschlauchs 1 gelenkig miteinander verbunden werden können, um so den Gliederschlauch 1 aufzubauen. Obwohl in den Fig. 1 bis 5 nur zwei Segmente 2 dargestellt sind, die über die gelenkige Verbindung 3 miteinander verbunden sind, ist klar, dass der Gliederschlauch 1 grundsätzlich auch mehr als zwei derartige Segmente 2 aufweisen kann, die dann über eine entsprechende Anzahl an derartigen gelenkigen Verbindungen 3 miteinander verbunden sein können.

Gemäß den Fig. 1 bis 5 umfasst die jeweilige gelenkige Verbindung 3 ein erstes ringförmiges Bauteil 5 und ein zweites ringförmiges Bauteil 6. Im Beispiel des Gliederschlauchs 1 sind die beiden Bauteile 5, 6 jeweils durch einen Axialabschnitt eines der Segmente 2 gebildet. Somit bildet das erste Bauteil 5 einen ersten Abschnitt 7 des jeweiligen Segments 2, während das zweite Bauteil 6 einen zweiten Abschnitt 8 des jeweiligen Segments 2 bildet.

Innerhalb der jeweiligen gelenkigen Verbindung 3 weist das erste Bauteil 5 zumindest einen Abschnitt einer kugelschalensegmentförmigen Innenkontur 9 auf, während das zweite Bauteil 6 eine kugelschalensegmentförmige Außenkontur 10 aufweist, die komplementär zur Innenkontur 9 des ersten Bauteils 5 geformt ist und darin beweglich angeordnet ist. Die Verbindung 3 umfasst außerdem einen Haltering 11, der bezüglich der Segmente 2 bzw. bezüglich der Bauteile 5, 6 separat ist. An diesem Haltering 11 ist ein dem zweiten Bauteil 6 zugewandter ringförmiger Endabschnitt 12 der Innenkontur 9 ausgebildet. Mit anderen Worten, die mit der Außenkontur 10 des zweiten Bauteils 6 zusammenwirkende Innenkontur 9 setzt sich aus einem ausschließlich am ersten Bauteil 5 ausgebildeten Innenkonturabschnitt 13 und einem ausschließlich am Haltering 11 ausgebildeten Innenkonturabschnitt, nämlich dem Endabschnitt 12, zusammen. Somit ergänzt oder vervollständigt der Endabschnitt 12 des Halterings 11 den Konturabschnitt 13 des ersten Bauteils 5 zur Innenkontur 9.

Der Haltering 11 ist am ersten Bauteil 5 befestigt und kann insoweit auch als Bestandteil des ersten Bauteils 5 aufgefasst werden. Der Haltering 11 ist somit fest mit dem ersten Bauteil 5 verbunden und bezüglich des zweiten Bauteils 6 lose angeordnet, so dass sich das zweite Bauteil 6 relativ zum ersten Bauteil 5 und relativ zum Haltering 11 bewegen kann.

Die gelenkige Verbindung 3 ermöglicht dabei Drehbewegungen der beiden Segmente 2 relativ zueinander um eine Längsmittelachse 14 des einen Segments 2. Ferner ermöglicht die Verbindung 3 Schwenkbewegungen der beiden Segmente 2 relativ zueinander um eine Schwenkachse 15, die senkrecht auf der Längsmittelachse 14 steht und in der gewählten Darstellung der Fig. 1 und 2 außerdem senkrecht auf der Zeichnungsebene steht.

Der am Haltering 11 ausgebildete Endabschnitt 12 der Innenkontur 9 bildet einen Hinterschnitt, ragt also radial nach innen über den größten Querschnitt des Innenkonturabschnitts 13 des ersten Bauteils 5 vor. Somit kann der durch den Endabschnitt 12 gebildete Hinterschnitt die Außenkontur 10 des zweiten Bauteils 6 formschlüssig übergreifen. Bei hinreichender Formstabilität der Segmente 2 bzw. der Bauteile 5, 6 und des Halterings 11 lassen sich die Bauteile 5, 6 nur noch unter Zerstörung des ersten Bauteils 5 und/oder des zweiten Bauteils 6 und/oder des Halterings 11 axial voneinander trennen.

Zur Realisierung des Hinterschnitts schließt der Endabschnitt 12 des Halterings 11 zweckmäßig im Bereich des größten Innendurchmessers an den Innenkonturabschnitt 13 des ersten Bauteils 5 axial an. Hierdurch ist bei der Montage der Verbindung 3 eine elastische Deformation eines der Bauteile 5, 6 nicht erforderlich.

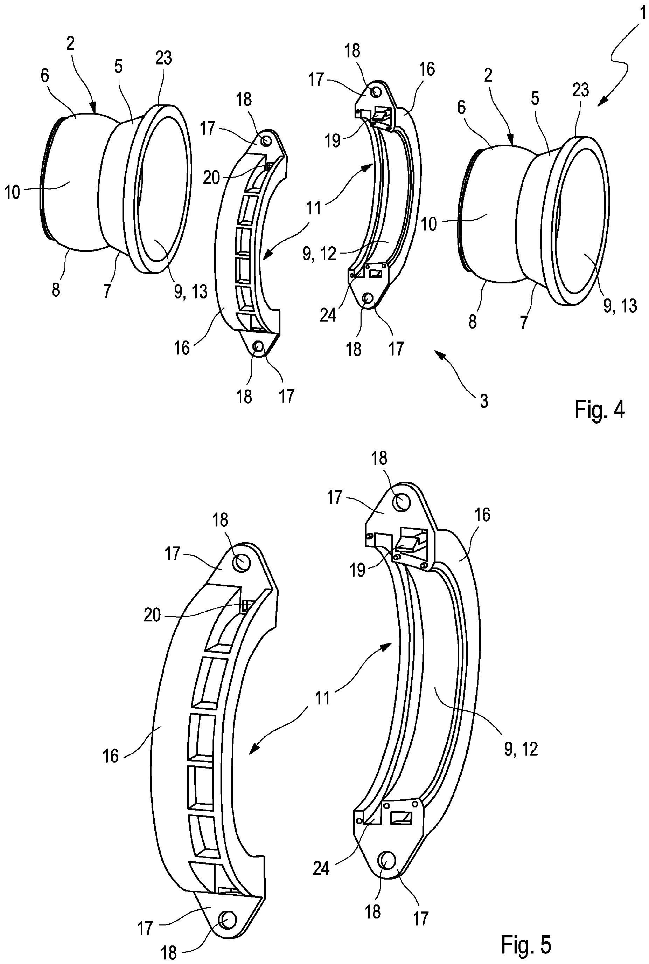

Vorzugsweise besteht der Haltering 11 aus genau zwei Teilringen 16, die im Folgenden auch als Halbringe 16 bezeichnet werden können. Die beiden Halbringe 16 erstrecken sich in der Umfangsrichtung jeweils über 180°. Die Halteringe 16 können entsprechend den Fig. 4 und 5 auf beliebige Weise miteinander verbunden werden, um den Haltering 11 zu schließen. Beispielsweise können Laschen 17 mit Augen 18 vorgesehen sein, um Schraubverbindungen oder Nietverbindungen herzustellen. Zusätzlich oder alternativ kann auch eine Verrastung vorgesehen sein. Beispielsweise kann jeder Halbring 16 eine in Umfangsrichtung vorstehende Raste 19 aufweisen, die beim Anbringen des Halterings 11 in eine am anderen Halbring 16 ausgebildete Rastöffnung 20 in der Umfangsrichtung eingreift und radial damit verrastet.

Grundsätzlich sind auch andere Befestigungsmethoden denkbar. Beispielsweise kann auch eine Schellenverbindung vorgesehen sein. Ferner ist klar, dass der Haltering 11 auch aus mehr als zwei Teilringen 16 zusammengebaut sein kann. Ebenso ist denkbar, den Haltering 11 nicht in der Umfangsrichtung sondern in Axialrichtung zu teilen.

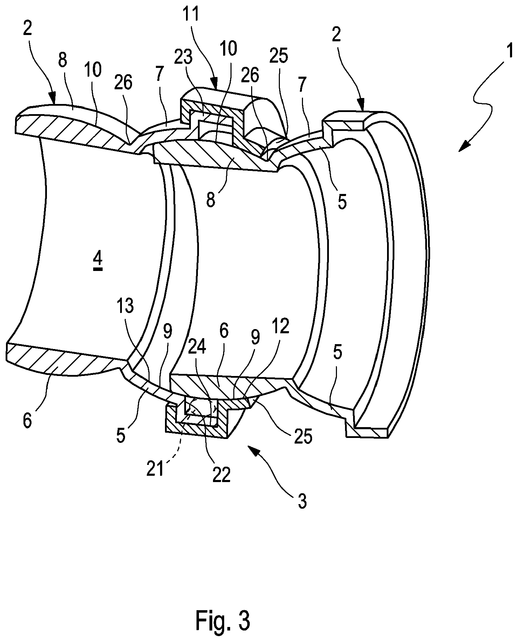

Innerhalb der Verbindung 3 kann wenigstens eine Dichtung 21 vorgesehen sein, um die Verbindung 3 fluiddicht zu gestalten. Die jeweilige Dichtung 21 ist im Beispiel als Ringdichtung, insbesondere als O-Ring konzipiert. In diesem Fall kann für die jeweilige Dichtung 21 eine Ringnut 22 vorgesehen sein, in welche die Dichtung 21 eingesetzt ist. Dem Beispiel der Fig. 1 ist eine derartige Ringnut 22 im zweiten Bauteil 6, also radial außen im Bereich der Außenkontur 10 ausgebildet. Bei der in Fig. 2 gezeigten Ausführungsform ist die Ringnut 22 in Form einer axial offenen Ringstufe am Haltering 11 ausgebildet. Bei diesem Beispiel wird die Ringnut 22 axial durch eine axiale Stirnseite des ersten Bauteils 5 komplettiert. Bei der in Fig. 3 gezeigten Ausführungsform ist die Ringnut 22 am ersten Bauteil 5 ausgebildet, also im Bereich der Innenkontur 9 bzw. des Innenkonturabschnitts 13. Beispielhaft ist hier die Ringnut 22 im Form einer axial offenen Ringstufe ausgebildet, die axial durch eine Wand des Halterings 11 komplementiert ist. Insoweit ist bei den Ausführungsformen der Fig. 2 und 3 die Ringnut 22 teilweise am ersten Bauteil 5 und teilweise am Haltering 11 ausgebildet. Es ist klar, dass auch Ausführungsformen denkbar sind, bei denen die Ringnut 22 vollständig im Haltering 11 oder vollständig im ersten Bauteil 5 ausgebildet ist. Ferner ist denkbar, mehrere Ringnuten 22 mit mehreren Dichtungen 21 vorzusehen. Alternativ ist ebenso denkbar, zumindest eine solche Dichtung 21 an die Außenkontur 10 oder an die Innenkontur 9 anzuspritzen.

Bei den hier gezeigten Ausführungsformen besitzt das erste Bauteil 5 an einem dem zweitem Bauteil 6 zugewandten Ende einen Kragen 23, der ringförmig umläuft und radial nach außen absteht. Der Haltering 11 besitzt komplementär zum Kragen 23 eine umlaufende Aufnahmenut 24, in die der Kragen 23 eingreift. Hierdurch ergibt sich eine formschlüssige axiale Sicherung zwischen Haltering 11 und erstem Bauteil 5. Der Haltering 11 besitzt bei den hier gezeigten bevorzugten Ausführungsformen an einem dem zweiten Bauteil 6 zugewandten Ende eine ringförmige Anschlagkontur 25. Komplementär dazu besitzt das zweite Bauteil 6 an seiner Außenseite eine Gegenanschlagkontur 26, mit der die Anschlagkontur 25 zur Begrenzung der winkelmäßigen Beweglichkeit der Verbindung 3 bzw. der beiden Bauteile 5, 6 zueinander zusammenwirkt. Die Anschlagkontur 25 und Gegenanschlagkontur 26 sind dabei so aufeinander abgestimmt, dass sich eine möglichst materialschonende Kontaktierung, zweckmäßig eine flächige Kontaktierung ergibt.

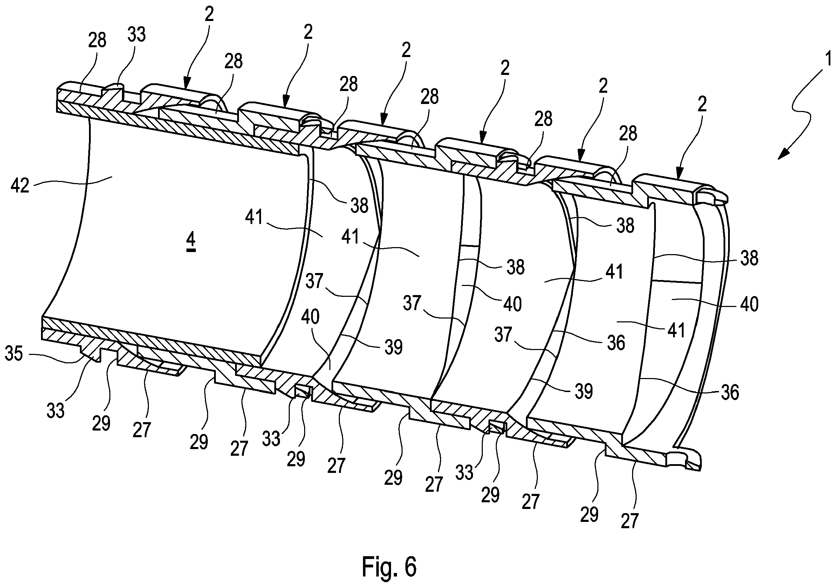

Wie erwähnt, kann mit Hilfe der in den Fig. 1 bis 5 vorgestellten gelenkigen Verbindung 3 ein Gliederschlauch 1 aufgebaut werden, dessen Segmente 2 einen das erste Bauteil 5 bildenden ersten Axialabschnitt 7 und einen das zweite Bauteil 6 bildenden zweiten Axialabschnitt 8 aufweisen, wobei benachbarte Segmente 2 jeweils über eine derartige Verbindung 3 gelenkig miteinander verbunden sind. Im Unterschied dazu wird mit Bezug auf die Fig. 6 bis 8 nachfolgend ein Gliederschlauch 1 näher beschrieben, der ohne eine Verbindung 3 der vorstehend mit Bezug auf die Fig. 1 bis 5 näher erläuterten Ausführungsform auskommt.

Entsprechend den Fig. 6 bis 8 umfasst der Gliederschlauch 1 ebenfalls mehrere Segmente 2, die ringförmig ausgestaltet sind und jeweils gelenkig miteinander verbunden sind. Jedes Segment 2 besitzt einen Außenringabschnitt 27 und einen Innenringabschnitt 28, die über eine umlaufende, außenliegende Ringstufe 29 ineinander übergehen.

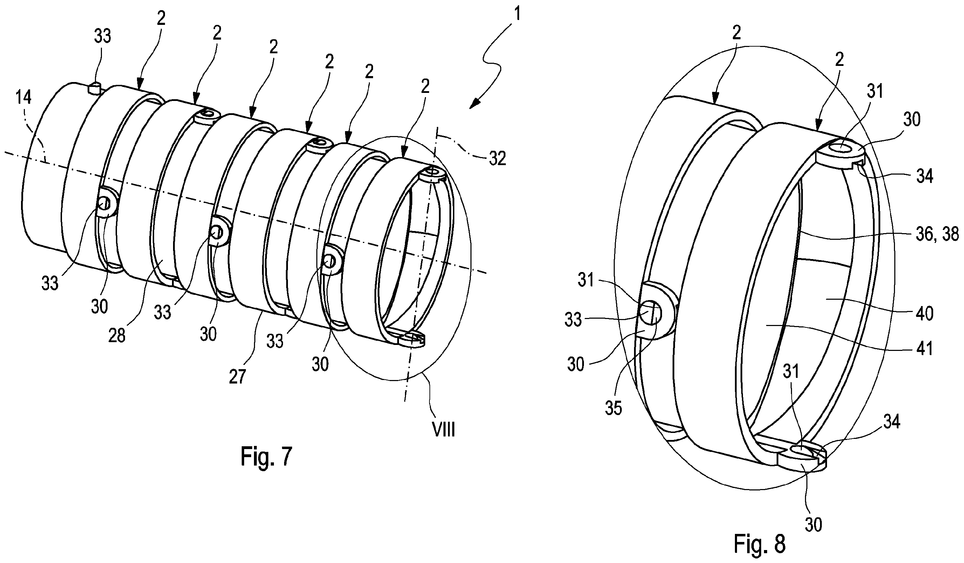

Entsprechend den Fig. 7 und 8 weist das jeweilige Segment 2 an seinem Außenringabschnitt 27 genau zwei axial abstehende Laschen 30 auf, die einander diametral gegenüberliegen und die jeweils ein Lagerauge 31 besitzen. Die Lageraugen 31 sind dabei radial orientiert und definierten dadurch eine in Fig. 7 angedeutete Schwenkachse 32. Das jeweilige Segment 2 weist an seinem Innenringabschnitt 28 jeweils genau zwei radial nach außen abstehende Zapfen 33 auf, die voneinander diametral abgewandt sind und die bezüglich der Laschen 30 desselben Segments 2 in der Umfangsrichtung um 90° versetzt angeordnet sind. Innerhalb des Gliederschlauchs 1 können nun bei benachbarten Segmenten 2 die Zapfen 33 des einen Segments 2 in die Lageraugen 31 der Laschen 30 des anderen Segments 2 radial eingreifen. Hierdurch sind benachbarte Segmente 2 um die jeweilige Schwenkachse 32 verschwenkbar aneinander gelagert.

Um das Einführen der Zapfen 33 in die Lageraugen 31 zu erleichtern, können die Laschen 30 gemäß Fig. 8 jeweils mit einer Einführschräge 34 ausgestattet sein. Zusätzlich oder alternativ können die Zapfen 33 mit einer Einführschräge 35 ausgestattet sein. Hierdurch wird das axiale Stecken der Segmente 2 extrem vereinfacht, während ein axiales Auseinanderziehen der Segmente 2 durch den Formschluss der Zapfen 33 in den Laschen 30 verhindert wird.

Entsprechend den Fig. 6 und 8 weist das jeweilige Segment 2 an einer Innenseite seines Außenringabschnitts 27 eine Anschlagkontur 36 auf. Diese Anschlagkontur 36 wirkt innerhalb des Gliederschlauchs 1 mit einer axialen Stirnseite 37 des jeweils benachbarten Segments 2 zusammen, um so die winkelmäßige Beweglichkeit der Segmente 2 relativ zueinander zu begrenzen. Zweckmäßig ist dabei die Anschlagkontur 36 mit Hilfe von zwei halben Ringstufen 38, 39 realisiert, die an der Innenseite des jeweiligen Segments 2 angeordnet sind und die sich in der Umfangsrichtung jeweils über 180° erstrecken. Die beiden halben Ringstufen 38, 39 grenzen in einer hier nicht näher dargestellten Längsmittelebene des jeweiligen Segments 2 aneinander. In besagter Längsmittelebene liegt dabei die Schwenkachse 32 des jeweiligen Segments 2. Die Ringstufen 38, 39 erstrecken sich dabei jeweils in einer Ebene, die zu einer Normalebene des jeweiligen Segments 2 geneigt ist. Die Normalebene des jeweiligen Segments 2 erstreckt sich dabei senkrecht zur Längsmittelachse 14 des jeweiligen Segments 2. Bemerkenswert ist, dass die beiden Ebenen, in denen die beiden Ringstufen 38, 39 liegen, gegenüber der Normalebene entgegengesetzt geneigt sind.

Bei den hier gezeigten Ausführungsformen ist ferner vorgesehen, dass die Innenseite des Außenringabschnitts 27 eine kugelschalensegmentförmige Innenkontur 40 besitzt, die an die jeweilige halbe Ringstufe 38 bzw. 39 angrenzt.

Der jeweilige Innenringabschnitt 28 des jeweiligen Segments 2 besitzt eine dem Innenraum 4 zugewandte Innenkontur 41. Innerhalb des Gliederschlauchs 1 sind nun benachbarte Segmente 2 soweit axial ineinander eingesteckt, dass die Innenkontur 41 des Innenringabschnitts 28 eines solchen Segments 2 axial an die Innenkontur 41 des Innenringabschnitts 28 des dazu benachbarten Segments 2 radial bündig anschließt. Zweckmäßig ist vorgesehen, dass die kugelschalensegmentförmige Innenkontur 40 des Außenringabschnitts 27 des jeweiligen Segments über die Anschlagkontur 36, also insbesondere über die Ringstufen 38, 39 in die Innenkontur 41 des Innenringabschnitts 28 desselben Segments 2 übergeht.

Gemäß Fig. 6 kann der Gliederschlauch 1 außerdem einen flexiblen Schlauch 42 aufweisen, der durch die hohlen Segmente 2 hindurchgeführt ist und der sich radial außen an den Segmenten 2 abstützt. Der Schlauch 42 liegt dabei mit seiner Außenseite flächig an den aneinander anschließenden Innenkonturen 41 der Innenringabschnitte 28 an. Der flexible Schlauch 42 kann aufgrund seiner Flexibilität, die über eine geeignete Materialauswahl gewährleistet werden kann, den Formänderung des Gliederschlauchs 1 elastisch folgen, die dieser aufgrund der beweglich miteinander verbundenen Segmente 2 durchführen kann. Bei dieser Bauweise übernimmt der Schlauch 42 die fluiddichte Führung des Fluids im Inneren 4 des Gliederschlauchs 1. Die Ringsegmente 2 übernehmen die Druckabstützung für den Fall, dass im Gliederschlauch 1 ein Fluid transportiert werden soll, dessen Druck deutlich oberhalb des in der Umgebung des Niederschlauchs 1 herrschenden Drucks liegt. Die Laschen 30 und die Zapfen 33 übernehmen die axiale Verbindung benachbarter Segmente 2 sowie die gelenkige Lagerung benachbarter Segmente 2. Durch den Versatz der Laschen 30 und der Zapfen 33 um 90° in der Umfangsrichtung am selben Segment 2 ergibt sich innerhalb des Gliederschlauchs 1 eine kardanische Beweglichkeit der aufeinanderfolgenden Segmente 2.

## Patentansprüche

1. Gliederschlauch für die Leitung eines Fluids, mit mehreren gelenkig miteinander verbundenen ringförmigen Segmenten (2), die jeweils einen Außenringabschnitt (27) und einen Innenringabschnitt (28) aufweisen, der in den Außenringabschnitt (27) eines benachbarten Segments (2) eingesteckt ist,
- wobei das jeweilige Segment (2) an seinem Außenringabschnitt (27) zwei axial abstehende, einander diametral gegenüberliegende Laschen (30) aufweist, die jeweils ein Lagerauge (31) besitzen,
- wobei das jeweilige Segment (2) an seinem Innenringabschnitt (28) zwei radial nach außen abstehende, voneinander diametral abgewandte Zapfen (33) aufweist, die jeweils in ein Lagerauge (31) einer Lasche (30) eines benachbarten Segments (2) eingreifen,
**dadurch gekennzeichnet,**
**dass** das jeweilige Segment (2) an einer Innenseite seines Außenringabschnitts (27) eine Anschlagkontur (36) aufweist, die mit einer axialen Stirnseite (37) des Innenringabschnitts (28) eines benachbarten Segments (2) zur Begrenzung der winkelmäßigen Beweglichkeit der Segmente (2) relativ zueinander zusammenwirkt.

2. Gliederschlauch nach Anspruch 1,
**dadurch gekennzeichnet,**
**dass** am jeweiligen Segment (2) die Zapfen (33) in der Umfangsrichtung, insbesondere um 90°, bezüglich der Laschen (30) versetzt angeordnet sind.

3. Gliederschlauch nach Anspruch 1 oder 2,
**dadurch gekennzeichnet,**
**dass** die jeweilige Lasche (30) eine Einführschräge (34) aufweist.

4. Gliederschlauch nach einem der Ansprüche 1 bis 3,
**dadurch gekennzeichnet,**
**dass** der jeweilige Zapfen (33) eine Einführschräge (35) aufweist.

5. Gliederschlauch nach einem der Ansprüche 1 bis 4,
**dadurch gekennzeichnet,**
**dass** die Anschlagkontur (36) zwei halbe Ringstufen (38, 39) aufweist, die sich in der Umfangsrichtung jeweils über 180° erstrecken, die in einer Längsmittelebene des jeweiligen Segments (2) aneinandergrenzen, in der eine durch die Lageraugen (31) desselben Segments (2) definierten Schwenkachse (32) liegt, und die jeweils in einer Ebene liegen, die zu einer senkrecht zur Längsmittelachse (14) des jeweiligen Segments (2) verlaufende Normalebene entgegengesetzt geneigt sind.

6. Gliederschlauch nach Anspruch 5,
**dadurch gekennzeichnet,**
**dass** die Innenseite des Außenringabschnitts (27) des jeweiligen Segments (2) an die jeweilige halbe Ringstufe (38, 39) angrenzend eine kugelschalensegmentförmige Innenkontur (40) aufweist.

7. Gliederschlauch nach einem der Ansprüche 1 bis 6,
**dadurch gekennzeichnet,**
**dass** benachbarte Segmente (2) soweit ineinander gesteckt sind, dass eine Innenkontur (41) des Innenringabschnitts (28) des einen Segments (2) axial an die Innenkontur (41) des Innenringabschnitts (28) des anderen Segments (2) anschließt.

8. Gliederschlauch nach Anspruch 7,
**dadurch gekennzeichnet,**
**dass** die Innenkontur (40) des Außenringabschnitts (27) des jeweiligen Segments (2) über die Anschlagkontur (36) in die Innenkontur (41) des Innenringabschnitts (28) desselben Segments (2) übergeht.

9. Gliederschlauch nach einem der Ansprüche 1 bis 8,
**gekennzeichnet**
**durch** einen durch die Segmente (2) hindurchgeführten, flexiblen Schlauch (42), der sich radial außen an den Segmenten (2) abstützt.

10. Verwendung eines Gliederschlauchs nach einem der Ansprüche 1 bis 9 als Ladeluftschlauch bei einer Brennkraftmaschine zum Verbinden eines Verdichterausgangs mit einem Ladeluftkühlereingang.

## Claims

1. Multilink hose for the transmission of a fluid, with a plurality of ring-shaped segments (2) which are articulatedly connected to one another and which each has an outer ring portion (27) and an inner ring portion (28) that is inserted in the outer ring portion (27) of a neighbouring segment (2),
- wherein the respective segment (2) has on its outer ring portion (27) two axially protruding brackets (30) which are located diametrically opposite one another and which each have a bearing eye (31),
- wherein the respective segment (2) has on its inner ring portion (28) two radially outwardly protruding pegs (33) which diametrically face away from one another and which each engage in a bearing eye (31) of a bracket (30) of a neighbouring segment (2),
**characterised in that**
the respective segment (2) has an abutment contour (36) on an inner side of its outer ring portion (27) that cooperates with an axial end face (37) of the inner ring portion (28) of a neighbouring segment (2) to limit the angular movability of the segments (2) relative to one another.

2. Multilink hose according to claim 1,
**characterised in that**
the pegs (33) on the respective segment (2) are arranged to be offset in the circumferential direction relative to the brackets (30), in particular by 90°.

3. Multilink hose according to claim 1 or 2,
**characterised in that**
the respective bracket (30) has an insertion bevel (34).

4. Multilink hose according to any one of claims 1 to 3,
**characterised in that**
the respective peg (33) has an insertion bevel (35).

5. Multilink hose according to any one of claims 1 to 4,
**characterised in that**
the abutment contour (36) has two half-ring steps (38, 39) which each extends over 180° in the circumferential direction, which adjoin one another in a longitudinal centre plane of the respective segment (2) in which there is located a pivot axis (32) defined by the bearing eyes (31) of the same segment (2), and which are each located in respective planes that are inclined counter to a normal plane extending perpendicularly to the longitudinal centre plane (14) of the respective segment (2).

6. Multilink hose according to claim 5,
**characterised in that**
the inner side of the outer ring portion (27) of the respective segment (2) has a ball-socket-segment-shaped inner contour (40) adjoining the respective half-ring step (38,39).

7. Multilink hose according to any one of claims 1 to 6,
**characterised in that**
neighbouring segments (2) are inserted in one another to such an extent that an inner contour (41) of the inner ring portion (28) of one segment (2) axially adjoins the inner contour (41) of the inner ring portion (28) of the other segment (2).

8. Multilink hose according to claim 7,
**characterised in that**
the inner contour (40) of the outer ring portion (27) of the respective segment (2) changes via the abutment contour (36) into the inner contour (41) of the inner ring portion (28) of the same segment (2).

9. Multilink hose according to any one of claims 1 to 8,
**characterised by**
a flexible hose (42) that is fed through the segments (2) and that supports itself radially outwardly on the segments (2).

10. Use of a multilink hose according to any one of claims 1 to 9 as a charge air hose in an internal combustion engine to connect a compressor outlet to a charge air cooler inlet.

## Revendications

1. Tuyau souple articulé pour l'acheminement d'un fluide, avec plusieurs segments (2) de forme annulaire raccordés les uns aux autres de manière articulée, lesquels présentent respectivement une section annulaire extérieure (27) et une section annulaire intérieure (28), qui est enfichée dans la section annulaire extérieure (27) d'un segment (2) adjacent,
- dans lequel le segment (2) respectif présente, au niveau de sa section annulaire extérieure (27), deux brides (30) dépassant de manière axiale, se faisant face l'une l'autre de manière diamétrale, lesquelles possèdent respectivement un oeillet de palier (31),
- dans lequel le segment (2) respectif présente, au niveau de sa section annulaire intérieure (28), deux tenons (33) dépassant de manière radiale vers l'extérieur, opposés l'un l'autre de manière diamétrale, lesquels viennent respectivement en prise avec un oeillet de palier (31) d'une bride (30) d'un segment (2) adjacent, **caractérisé en ce**
**que** le segment (2) respectif présente, au niveau d'un côté intérieur de sa section annulaire extérieure (27), un contour de butée (36) qui coopère avec un côté frontal (37) axial de la section annulaire intérieure (28) d'un segment (2) adjacent servant à limiter la mobilité angulaire des segments (2) les uns par rapport aux autres.

2. Tuyau souple articulé selon la revendication 1,
**caractérisé en ce**
**que** les tenons (33) sont disposés, au niveau du segment (2) respectif, de manière décalée dans la direction périphérique, en particulier de 90°, par rapport aux brides (30).

3. Tuyau souple articulé selon la revendication 1 ou 2,
**caractérisé en ce**
**que** la bride (30) respective présente un chanfrein d'introduction (34).

4. Tuyau souple articulé selon l'une quelconque des revendications 1 à 3,
**caractérisé en ce**
**que** le tenon (33) respectif présente un chanfrein d'introduction (35).

5. Tuyau souple articulé selon l'une quelconque des revendications 1 à 4,
**caractérisé en ce**
**que** le contour de butée (36) présente deux demi-étages annulaires (38, 39), qui s'étendent dans la direction périphérique respectivement sur 180°, qui se jouxtent dans un plan central longitudinal du segment (2) respectif, dans lequel se trouve un axe de pivotement (32) défini par les oeillets de palier (31) du même segment (2), et qui se situent respectivement dans des plans, qui sont inclinés de manière opposée par rapport à un plan normal s'étendant de manière perpendiculaire par rapport à l'axe central longitudinal (14) du segment (2) respectif.

6. Tuyau souple articulé selon la revendication 5,
**caractérisé en ce**
**que** le côté intérieur de la section annulaire extérieure (27) du segment (2) respectif présente, en jouxtant le demi-palier annulaire (38, 39) respectif, un contour intérieur (40) en forme de segment de coque sphérique.

7. Tuyau souple articulé selon l'une quelconque des revendications 1 à 6,
**caractérisé en ce**
**que** des segments (2) adjacents sont emboîtés les uns dans les autres jusqu'à ce qu'un contour intérieur (41) de la section annulaire intérieure (28) de l'un des segments (2) se situe dans le prolongement axial du contour intérieur (41) de la section annulaire intérieure (28) de l'autre segment (2).

8. Tuyau souple articulé selon la revendication 7,
**caractérisé en ce**
**que** le contour intérieur (40) de la section annulaire extérieure (27) du segment (2) respectif devient, par l'intermédiaire du contour de butée (36), le contour intérieur (41) de la section annulaire intérieure (28) du même segment (2).

9. Tuyau souple articulé selon l'une quelconque des revendications 1 à 8,
**caractérisé**
**par** un tuyau souple flexible (42) guidé à travers les segments (2), lequel prend appui de manière radiale à l'extérieur au niveau des segments (2).

10. Utilisation d'un tuyau souple articulé selon l'une quelconque des revendications 1 à 9 en tant que tuyau souple d'air de suralimentation dans un moteur à combustion interne servant à raccorder une sortie de compresseur à une entrée de refroidisseur d'air de suralimentation.
